# EUROPEAN PATENT SPECIFICATION

(11) **EP 1 961 718 B1**
(45) Date of publication and mention of the grant of the patent: **11.11.2009**
(21) Application number: 07101228.0
(22) Date of filing: 26.01.2007
(51) Int. Cl.: C04B 41/63

(54) **Finished product of fiber cement and method of manufacturing thereof**
Endprodukt aus Faserzement und Herstellungsverfahren dafür
Produit fini en fibrociment et son procédé de fabrication

(43) Date of publication of application: 27.08.2008
(73) Proprietor: Eternit B.V., 7471 LV Goor (NL); REDCO NV, 1880 Kapelle-op-den-Bos (BE)
(72) Inventor: Bijkerk, Boudewijn, Oldenzaal 7577 HW (NL); Bakker, Gerald, Hellendoorn 7447 BX (NL); Deblauwe, Veerle, 1840 Londerzeel (BE)
(74) Representative: Claeys, Pierre

(56) References cited:
- EP-A1- 0 808 778
- WO-A-2004/007193
- US-A1- 2002 081 437

## Description

The present invention relates to a finished product of hard material having a front side and a back side, and comprising at least one spacer made of a protective hot melt composition which adheres to said back side and is not able to adhere to any other finished product in use conditions.

According to the invention the finished products are fiber cement products ready to use, which must be protected from scuffing damage during storage, transport, handling and fixing or mounting.

It is usually known that a disadvantageous property of fiberer problem of cementitious products is their unattractive greyish colour; even by mass colouring through the addition of pigments during their manufacture, bright colours are not obtained.

To avoid the abovementioned disadvantageous properties, fiber cement products are frequently provided with a finish before the fiber cement article leaves the production plant.

Unfortunately, these finished fiber cement products are often visually damaged before or after installation. The damage is usually caused as a result of the heavy weight and of the abrasive back side of finished fiber cement products rubbing against the finished front side of underlying products, for instance during stacking and unstacking, during transit from the plant to the job site or during installation. In some cases, the finished fiber cement products are packed face-to-face, and even in this pattern, the finished fiber cement product is liable to scuffing damage due to the presence of abrasive particles (e.g. fiber cement particles from operations like cutting or edge trimming). Moreover, fiber cement siding planks are often textured to resemble wood planks; this texture pattern can cause abrasion of the painted surfaces during face-to-face rubbing. Furthermore, stacking finished fiber cement products in a front-to-front or back-to-back configuration requires a means to flip the finished fiber cement products in the superposing operation, either manually or mechanically, thereby requiring additional labour or equipment.

In order to avoid the scuffing damage of finished fiber cement products, additional protective packaging is sometimes provided to preserve the appearance of the factory-applied coating. Stacks of finished fiber cement products are therefore often assembled using a liner between adjacent sheets. Suitable liners include paper, plastic, foam, nonwoven of fabric sheets or film materials, which adhere or not (in this case the liners remain in place by friction) onto the surface of the finished fiber cement products. Protective layers which are applied without an adhesive are less suitable for automated application, and consequently are typically applied manually, which is expensive and limits throughput. In case the protective layer adheres to the finish layer of the fiber cement product, peeling-off this protective layer implies additional installation labour. Finished fiber cement products provided with protective layers adhered to the finish layer and optionally provided with spacers, which must be removed before installation, are described in EP-A-1534511. Moreover, liners have the inconvenience that their removal generates a lot of waste.

It has been possible to overcome this problem on ceramic tiles by making use of blobs of a friction reducing material, such as a hot melt adhesive applied to the underside of the tiles, as proposed in EP-B-0808778. This method seems to be insufficient in the case of large and heavy boards or planks. Moreover, these dots of friction reducing material applied on the rear side thereof are relatively thick in order to provide a sufficient cushioning effect and give problems related to stability upon stacking.

The object of the present invention is to overcome at least some of the abovementioned drawbacks and to provide a finished product which can be stacked and transported while maintaining its finished aspect without damage.

In order to solve these problems, there is provided according to the invention a finished product as indicated in the beginning of the present specification wherein said finished product of hard material is a fiber cement product and said spacer is a filament of protective hot melt composition which adheres only to the back side, in use conditions.

Advantageously, on the back side of the finished product according to the invention said filament of protective hot melt composition is continuous or discontinuous, preferably continuous. Said filament may have a shape of a spiral, or a zigzag. Preferably the filament forms a spacing rectilinear strip on said back side of the product which is provided with openings. Preferably, the back side of the product is provided with several spacing rectilinear strips in a parallel arrangement.

The wording "use conditions" means according to the present invention the usual temperatures at which the finished product is transported, stored, handled or used. These temperatures are in any case lower than the temperature at which the hot melt composition is applied and consequently at these usual temperatures the spacer is not more able to adhere only to the back side of the finished product.

A side of the fiber cement product according to the invention may be covered with any suitable finish, preferably a finish covering the front side. Suitable finishes are well known in the art, and are described for example in EP-B-0894780, US616251, W02006/050338, WO96/33143 and EP-A-0192627. They include, but are not limited to, water-based paints, solvent-based paints, oil-based paints, or solventless or low-solvent paints; latex-, alkyd-, epoxy-, urethane-, enamel-, or acrylic-based finishes; or powder coatings. The finish may be cured at ambient or at an elevated temperature and/or by irradiation with UV light, visible light or electron beams. The finish can also be laminated to the fiber cement substrate using methods known in the art, for example, thermally or with an adhesive.

The finish may be applied in a single layer or in multiple layers. In multilayer finishes, each layer may be selected to provide particular performance characteristics. In one embodiment, a primer layer is applied to the fiber cement article, and one or more decorative coatings are applied over the primer. The primer is pigmented, transparent or translucent and typically provides improved adhesion for later-applied finish layers; it may also have additional properties, for example, water repellency or fungicidal and/or biocidal activity.

In another embodiment, the topcoating has a selected surface glossiness.

The particular topcoat may also be selected for other desirable properties, for example, fungicidal and/or biocidal activity, durability, UV resistance, ease of cleaning, or water resistance. The top coating can be pigmented, transparent or translucent.

In another embodiment, the finish is a primer coating, which is finished as desired in the field.

The fiber cement products can be any usual known fiber cement products.

The process for the manufacture of the fiber-reinforced cement products most widely used is the Hatschek process, which is a modified sieve cylinder paper making machine. Other manufacturing processes are the Magnani process, Foudrinier process, injection, extrusion, flow-on and others. The protected finished fiber-reinforced cement products according to the present invention are preferably manufactured by the Hatschek process which was originally applied to the asbestos cement technology.

The manufacture of fiber cement products is well known, for example in EP-B-1047647.

Fiber cement products are manufactured for a variety of uses, including flat panels, siding planks, slates, building boards for interior and exterior wall cladding and corrugated sheets for roofing and cladding; they may be smooth, textured or perforated and are possibly provided with predrilled holes and/or cut edges. Preferably, the protected finished fiber cement products being the object of the present invention are siding planks, corrugated roofing sheets and building boards.

The protected finished fiber cement products according to the present invention are provided with at least one spacer made of a protective hot melt composition adhering to and partially covering the face opposite the finished face, i.e. the back side of the product. Suitable hot melt adhesives comprise paraffins, waxes, thermoplastics such as ethylene vinyl acetate copolymers, styrene-isoprene-styrene copolymers, styrene-butadiene-styrene copolymers, ethylene ethyl acrylate copolymers, isotactic, atactic or syndiotactic polypropylene, polyethylene, polybutene, reactive polyurethanes and their blends. The hot melt adhesive which is preferably used in the present invention generally has a Ball & Ring softening point (as measured according to ASTM E-28) in the range of from 50°C to 130°C. Preference is given to a hot melt adhesive having a Ball & Ring softening point of from 60°C to 115°C. The protective hot melt composition may also advantageously be pigmented.

Other embodiments of the present invention are also indicated in the appended claims.

The invention concerns also an assembly of finished products according to the invention comprising a plurality of fiber cement products provided with said at least one spacer and arranged in a stack, particularly face-to-back.

The present invention concerns also a method for manufacturing a finished product according to the invention, said method comprising the steps of hot extruding a filament of protective hot melt composition onto the back side of a fiber cement product, said filament adhering to said back side, and of cooling the so applied filament.

Other details of the present invention will result from the description of non-limitative embodiments, with reference to the appended drawings.

Figure 1 is a schematic view in perspective of a nozzle applying a filament of protective hot melt composition onto the back side of a finished product according to the invention.

Figure 2 is a partial view of the back side of a finished product according to the invention.

Figure 3 is a cross section of stacked corrugated sheets which are provided with spacers according to the invention.

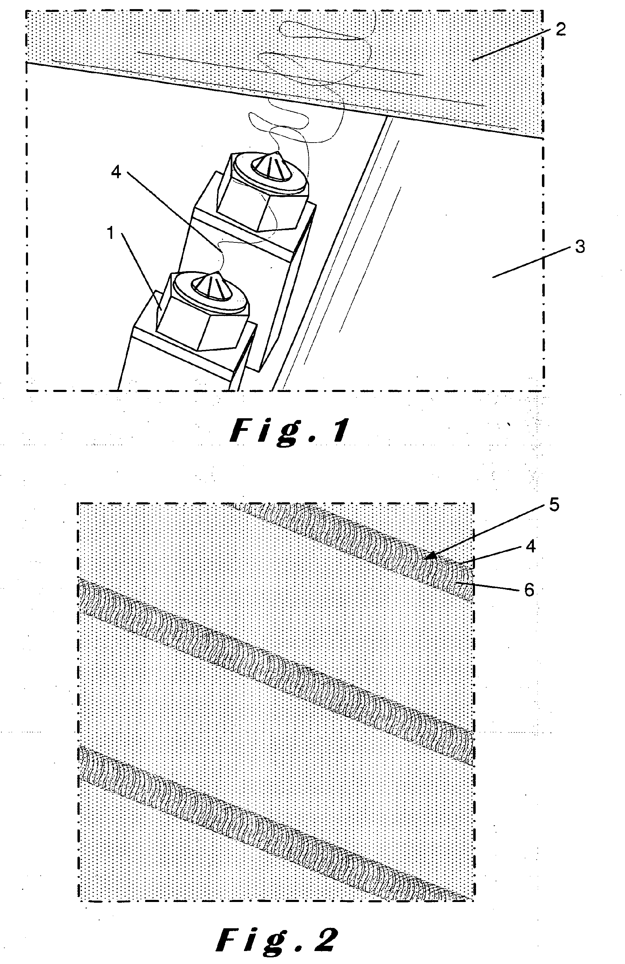

In the embodiment illustrated in these figures, the hot melt adhesive used to protect fiber cement products according to the present invention is preferably spirally sprayed onto the back side of the finished fiber cement product by extrusion of a continuous filament through a nozzle. This non-contact application technique is well known to those skilled in the art, and commercial equipment, e.g. using compressed air, is readily available from e.g. L.C. Maan Engineering (NL), Intad (BE), Nordson (US), ITW Dynatec (US) for typical applications such as packaging. Such a typical equipment comprising several nozzles 1 with grooves for preheated compressed air passage is shown in figure 1. The spray coating technique avoids direct contact between the coating head and the substrate which is here a corrugated sheet 2 moved onto rolls 3. The used hot melt adhesives have preferably a Brookfield viscosity sufficiently low, usually in the range of 0,5 to 30 Pas, preferably in the range of 0,6 to 15 Pas at the application temperature. Many other physical factors, especially the rheological properties of the adhesive, come into play in determining the sprayability of a hot melt. The filament 4 of the hot melt adhesive is spirally sprayed from the nozzle 1 at a temperature equal to or slightly above the melting point of the hot melt adhesive by a swirl action through the use of hot compressed air during its extrusion. The filament is so interlocking and forms a rectilinear spacing strip 5 with openings 6 as shown in figure 2, thereby allowing "breathing" of the fiber cement product; consequently, it has not to be removed before or after installation. The width and thickness of the applied protective hot melt composition are experimentally determined so as to provide sufficient protection against scuffing damage. Advantageously and as illustrated on Figure 2, several strips 5 are arranged according to a parallel pattern on the back side of the products.

Usually the hot melt composition of the spacers is applied on the fiber cement product, before complete curing and/or drying of the finish layer, and before cooling the finished fiber cement product to room temperature, thereby enhancing the adhesion of the hot melt on the rough back side of the fiber cement product. Generally, the hot melt composition is applied on the finished fiber cement product while the latter is still at a temperature in the range of from 40 to 80 °C, preferably in the range of from 50 to 60 °C. After application of the hot melt adhesive, the finished fiber cement product passes through a cooling tunnel at the end of which it has a temperature slightly above room temperature. At this temperature, upon stacking, any undesired adhesion between the underlying product and the back side onto which the hot melt adhesive has been applied is avoided.

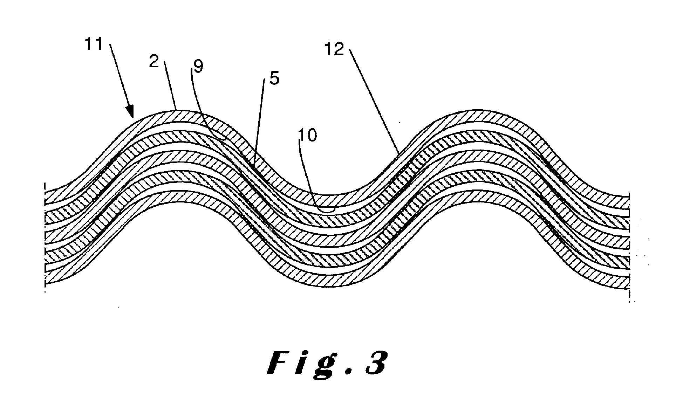

The protective hot melt composition of the spacers can be applied onto any fiber cement product. It is especially adapted to siding planks, building boards and corrugated sheets. In the case of building boards and siding planks, several nozzles spirally extruding the hot melt adhesive are used at a distance which has to be determined empirically so as to impart sufficient protection against scuffing damage; moreover, the protective hot melt composition on the back side provides the additional advantage of a sound absorbing barrier when the loosely fastened exterior sidings are liable to clappering during exposure to wind. In the case of corrugated sheets 2, the spacers of protective hot melt composition are applied through several nozzles disposed in such a manner that each of them extrudes a filament on the flanks 9 of the back side 10 of the corrugations, and more particularly on those areas liable to scuffing damage by rubbing against each other in an assembly 11 of corrugated sheets, as depicted in figure 3. Moreover, as the back side of corrugated roofing sheets is often visible, the protective hot melt composition can be pigmented to match the colour of the uncoated fiber cement product if necessary.

The protective hot melt composition on the back side of the fiber cement product sufficiently adheres to this side, and hence has not to be removed before or after installation of the fiber cement product.

The front side 12 of the corrugated sheets is advantageously provided with a finish layer.

### Example 1

The back sides of Ecolor® Extra (profile P76 3/4 FR) finished fiber cement corrugated sheets manufactured by Eternit BV were spirally spray coated with about 1,5 g/m HM 1532 GY hot melt adhesive supplied by Intercol BV at an application temperature of about 160°C and a substrate temperature of about 55°C. Thereafter the corrugated sheets were stacked face-to-back on a pallet consisting of 50 to 100 sheets after cooling. Three other pallets were superimposed on this pallet. The corrugated sheets were visually inspected after about 18 hours.

### Comparative example 2

Example 1 has been repeated, but without the application of the hot melt adhesive.

Severe damage was observed in comparative example 2, while example 1 gave corrugated sheets exempt of scuffing damage.

It is to be understood that the present invention is not limited to the disclosed and illustrated embodiments and that several modifications may be contemplated without departing from the scope of the appended claims.

## Claims

1. A finished product of hard material having a front side (12) and a back side (10), and comprising at least one spacer made of a protective hot melt composition which adheres only to said back side in use conditions,
**characterized in that** said finished product of hard material is a fiber cement product and said spacer is a filament (4) of protective hot melt composition.

2. A finished product according to claim 1, wherein said filament (4) of protective hot melt composition is continuous.

3. A finished product according to claim 1, wherein said filament (4) of protective hot melt composition is discontinuous.

4. A finished product according to anyone of claims 1 to 3, wherein said filament has a shape of a spiral or a zigzag.

5. A finished product according to anyone of claims 1 to 4, wherein said filament (4) of protective hot melt composition forms a spacing rectilinear strip (5) with openings (6) on said back side of the product.

6. A finished product according to claim 5, wherein the back side (10) of the product is provided with several spacing rectilinear strips (5) in a parallel arrangement.

7. A finished product according to anyone of claims 1 to 6, wherein the protective hot melt composition of said spacer has a Ball and Ring softening point (as measured according to ASTM E-28) of from 50°C to 130°C.

8. A finished product according to anyone of claims 1 to 7, wherein the protective hot melt composition is pigmented.

9. A finished product according to anyone of claims 1 to 8, wherein the finished product is a fiber cement product selected from a flat panel, a corrugated sheet (2), a slate, a siding plank or a building board.

10. A finished product according to claim 9, wherein said corrugated sheet (2) has corrugations with flanks (9) on which are arranged said spacers.

11. A finished product according to anyone of claims 1 to 10, further comprising a finish covering the front side (12) of the product.

12. An assembly (11) of finished products according to anyone of claims 1 to 11, comprising a plurality of fiber cement products provided with said at least one spacer and arranged in a stack, particularly face-to-back.

13. Method for manufacturing a finished product according to anyone of claims 1 to 11, comprising the steps of hot extruding a filament (4) of protective hot melt composition onto the back side (10) of a fiber cement product, said filament adhering to said back side, and of cooling the so applied filament.

## Patentansprüche

1. Endprodukt aus hartem Material, welches eine Vorderseite (12) und eine Rückseite (10) aufweist und mindestens ein Distanzstück umfasst, das aus einer schützenden Heißschmelzzusammensetzung hergestellt ist, die unter Gebrauchsbedingungen nur an der Rückseite anhaftet,
**dadurch gekennzeichnet, dass** das Endprodukt aus hartem Material ein Faserzementprodukt ist und das Distanzstück ein Filament (4) aus schützender Heißschmelzzusammensetzung ist.

2. Endprodukt nach Anspruch 1, wobei das Filament (4) aus schützender Heißschmelzzusammensetzung kontinuierlich ist.

3. Endprodukt nach Anspruch 1, wobei das Filament (4) aus schützender Heißschmelzzusammensetzung diskontinuierlich ist.

4. Endprodukt nach einem beliebigen der Ansprüche 1 bis 3, wobei das Filament spiral- oder zickzackförmig ist.

5. Endprodukt nach einem beliebigen der Ansprüche 1 bis 4, wobei das Filament (4) aus schützender Heißschmelzzusammensetzung einen beabstandenden geradlinigen Streifen (5) mit Öffnungen (6) an der Rückseite des Produktes bildet.

6. Endprodukt nach Anspruch 5, wobei die Rückseite (10) des Produkts mit mehreren beabstandenden geradlinigen Streifen (5) in einer parallelen Anordnung versehen ist.

7. Endprodukt nach einem beliebigen der Ansprüche 1 bis 6, wobei die schützende Heißschmelzzusammensetzung des Distanzstücks einen Erweichungspunkt Ring und Kugel (nach ASTM E-28 gemessen) von 50°C bis 130°C aufweist.

8. Endprodukt nach einem beliebigen der Ansprüche 1 bis 7, wobei die schützende Heißschmelzzusammensetzung pigmentiert ist.

9. Endprodukt nach einem beliebigen der Ansprüche 1 bis 8, wobei das Endprodukt ein Faserzementprodukt ausgewählt aus einer flachen Platte, einer Wellplatte (2), einer Schieferplatte, einer Fassadentafel oder einer Bauplatte ist.

10. Endprodukt nach Anspruch 9, wobei die Wellplatte (2) Wellungen mit Flanken (9) aufweist, an denen die Distanzstücke angeordnet sind.

11. Endprodukt nach einem beliebigen der Ansprüche 1 bis 10, ferner umfassend eine Beschichtung, welche die Vorderseite (12) des Produktes bedeckt.

12. Anordnung (11) aus Endprodukten nach einem beliebigen der Ansprüche 1 bis 11, umfassend eine Mehrzahl von Faserzementprodukten, die mit dem mindestens einen Distanzstück versehen und in einem Stapel, insbesondere Vorderseite an Rückseite, angeordnet sind.

13. Verfahren zum Herstellen eines Endprodukts nach einem beliebigen der Ansprüche 1 bis 11, umfassend die Schritte des Heißextrudierens eines Filaments (4) aus schützender Heißschmelzzusammensetzung auf die Rückseite (10) eines Faserzementprodukts, wobei das Filament an der Rückseite anhaftet, und des Kühlens des auf diese Weise aufgebrachten Filaments.

## Revendications

1. Produit fini en matériau dur, ayant une face avant (12) et une face arrière (10), et comprenant au moins un espaceur fait d'une composition thermofusible protectrice qui n'adhère qu'à ladite face arrière dans les conditions d'utilisation, **caractérisé en ce que** le produit fini en matériau dur est un produit en fibrociment et que ledit espaceur est un filament (4) d'une composition protectrice thermofusible.

2. Produit fini selon la revendication 1, dans lequel ledit filament (4) de composition protectrice thermofusible est continu.

3. Produit fini selon la revendication 1, dans lequel ledit filament (4) de composition protectrice thermofusible est discontinu.

4. Produit fini selon l'une quelconque des revendications 1 à 3, dans lequel ledit filament a une forme en spirale ou en zigzag.

5. Produit fini selon l'une quelconque des revendications 1 à 4, dans lequel ledit filament (4) de composition protectrice thermofusible forme une bande d'espacement rectiligne (5) comportant des ouvertures (6) sur l'arrière du produit.

6. Produit fini selon la revendication 5, dans lequel la face arrière (10) du produit est pourvue de plusieurs bandes d'espacement rectilignes (5) disposées en parallèle.

7. Produit fini selon l'une quelconque des revendications 1 à 6, dans lequel la composition protectrice thermofusible dudit espaceur possède un point de ramollissement bille et anneau (mesuré selon ASTM E-28) de 50°C à 130°C.

8. Produit fini selon l'une quelconque des revendications 1 à 7, dans lequel la composition protectrice thermofusible est pigmentée.

9. Produit fini selon l'une quelconque des revendications 1 à 8, dans laquelle le produit fini est un produit de fibrociment choisi parmi un panneau plat, une tôle ondulée (2), une ardoise, un bardage ou un panneau de construction.

10. Produit fini selon la revendication 9, dans lequel ladite tôle ondulée (2) présente des ondulations pourvues de flancs (9) sur lesquels sont disposés lesdits espaceurs.

11. Produit fini selon l'une quelconque des revendications 1 à 10, comprenant en outre un revêtement de finition sur la face avant (12) du produit.

12. Assemblage (11) de produits finis selon l'une quelconque des revendications 1 à 11, comprenant une pluralité de produits en fibrociment pourvus dudit au moins un espaceur et disposés en une pile, en particulier face contre dos.

13. Procédé de fabrication d'un produit selon l'une quelconque des revendications 1 à 11, comprenant les étapes d'extrusion à chaud d'un filament (4) de composition thermofusible protectrice sur la face arrière (10) d'un produit de fibrociment, ledit filament adhérant à ladite face arrière, et de refroidissement du filament ainsi appliqué.
